# EUROPEAN PATENT SPECIFICATION

(11) **EP 0 399 102 B1**
(45) Date of publication and mention of the grant of the patent: **24.08.1994**
(21) Application number: 89122193.9
(22) Date of filing: 01.12.1989
(51) Int. Cl.: F15B 15/20

(54) **Hydraulic-pneumatic cylinder device**
Hydropneumatische Zylindervorrichtung
Vérin hydropneumatique

(30) Priority: 15.05.1989 JP 55584/89
(43) Date of publication of application: 28.11.1990
(73) Proprietor: ISHIGAME MACHINERY CO., LTD., Anjoh-shi Aichi-ken (JP)
(72) Inventor: Kataoka, Noboru, Anjoh-shi Aichi-ken (JP)
(74) Representative: Reinhard - Skuhra - Weise & Partner

(56) References cited:
- DE-A- 3 436 679
- FR-A- 1 414 842
- FR-A- 1 417 702
- FR-A- 1 558 368
- GB-A- 1 242 128
- US-A- 2 976 845
- US-A- 3 507 189
- ÖLHYDRAULIK UND PNEUMATIK, vol. 18, no. 12, 1974, page 909: "Hydraulische Komponenten"

## Description

This invention relates to a hydraulic-pneumatic cylinder device according to the preamble of claim 1.

Generally, the invention concerns cylinder devices, wherein an actuating piston connected a piston rod is reciprocated to conduct an intended operation by utilizing the reciprocating movement of the piston rod. More particular, the invention refers to a cylinder device which relies on pneumatic drive power, but is controlled hydraulically. Such a cylinder device is hereinafter referred to as "hybrid cylinder device" for short.

Various types of cylinder devices are available in the market, and now widely used in various applications. Generally, the conventional cylinder devices are roughly classified into two basic types, namely, the hydraulic type and the pneumatic type.

Hydraulic cylinder devices utilize a working oil or liquid which is substantially incompressible even under a high pressure operating condition. Therefore, the hydraulic cylinder is capable of providing precise control and fine adjustment of piston rod movement. For this reason, the hydraulic cylinder is frequently used in applications, such as machine tools, XY or XYZ measuring tables, and industrial robots, which require high precision.

Pneumatic cylinder devices, on the other hand, utilize air which is easily compressible even under a relatively low working pressure. However, the working air has an advantage of being infinitely available anywhere at no cost. Further, pneumatic circuitry for operating the pneumatic cylinder device can be made much simpler and less costly than hydraulic circuitry. Therefore, the pneumatic cylinder is mainly used in applications wherein economy is more important than operating accuracy.

Obviously, the conventional cylinder devices, either hydraulic or pneumatic, have disadvantages of their own. For example, the hydraulic cylinder device is disadvantageous in that it inevitably becomes expensive due to strict requirements for its hydraulic circuit in addition to requiring frequent maintenance. The pneumatic cylinder device is defective in the difficulty of accurately controlling and finely adjusting piston rod movement because of easy compressibility of the air.

A hydraulic-pneumatic cylinder device according to the preamble of claim 1 is already known from DE-A-34 36 679. However, this cylinder device is disadvantageous in that it is not capable of selecting between different operational modes.

It is, therefore, an object of the present invention to provide a hybrid cylinder device, which is capable of conducting a drastic operational mode change by a simple operation.

According to the invention this object is obtained by the features of claim 1. Features of further advantageous embodiments are stated in dependent claims 2 to 27.

Accordingly, the invention advantageously provides a hydraulic-pneumatic cylinder device which is also capable of accurately controlling and finely adjusting piston rod movement without involving cost problems and requiring frequent maintenance. Moreover, the hybrid cylinder device according to the invention can generate a high power, and advantageously uses a single hydraulic unit to control piston rod movement in both axial directions.

According to the arrangement the hydraulic unit has two liquid chambers in order to make room for providing therebetween a flow control passage, which is used for piston movement control, and a mode control valve, which is controlled pneumatically. Therefore, the piston movement control can be conducted hydraulically without relying on air which is easily compressible, thereby enabling accurate control and fine adjustment of piston rod movement.

On the other hand, the cylinder device takes its drive power from an air supply source, so that a less costly pneumatic circuit can be used to introduce the air into the cylinder device. However, the air does not participate in controlling the piston movement, so that easy compressibility of the air poses no problem.

The hydraulic unit may be used to control piston rod movement only in the advancing direction for example, whereas the returning movement of the piston rod may be achieved for example by a coil spring which is compressed by the advancing movement of the piston rod. Such a manner of movement control is often acceptable in applications, such as machine tools, wherein accurate movement control is necessary only at the time of machining a workpiece during the advancing stroke of the piston rod, i.e., the tool held thereby.

Alternatively, the combination of the air chamber and the hydraulic unit may be used to move the piston rod in one axial direction, whereas the piston rod may be moved in the opposite axial direction by a similar combination of an additional air chamber and an additional hydraulic unit. In this way, the movement of the piston rod can be accurately controlled in both axial directions, as required for applications in measuring apparatuses for example.

In a further alternative arrangement, the single hydraulic unit may be utilized for accurately controlling piston rod movement in both axial directions. Such an arrangement is advantageous in that the cylinder device requires a smaller amount of working liquid but yet provides an equal or larger stroke for the piston rod.

Preferably, the interface means is provided in the form of a flexible bag defining therein the input liquid chamber of the hydraulic unit. The flexible bag provides a large pressure receiving area to enable the cylinder device to generate a large output.

The present invention will now be described further, by way of example only, with reference to the accompanying drawings, in which:
Figure 1 is a side view, in longitudinal section, showing a hybrid cylinder device according to a first embodiment of the present invention;
Figure 2 is a view of the same cylinder device as seen in the direction of an arrow II in Figure 1;
Figure 3 is a side view, in longitudinal section, showing a hybrid cylinder device according to a second embodiment of the present invention;
Figure 4 is a view similar to Figure 2 but showing a hybrid cylinder device according to a third embodiment of the present invention;
Figure 5 is a sectional view taken on lines V-V in Figure 4; and
Figure 6 is a sectional view taken on lines VI-VI in Figure 4.

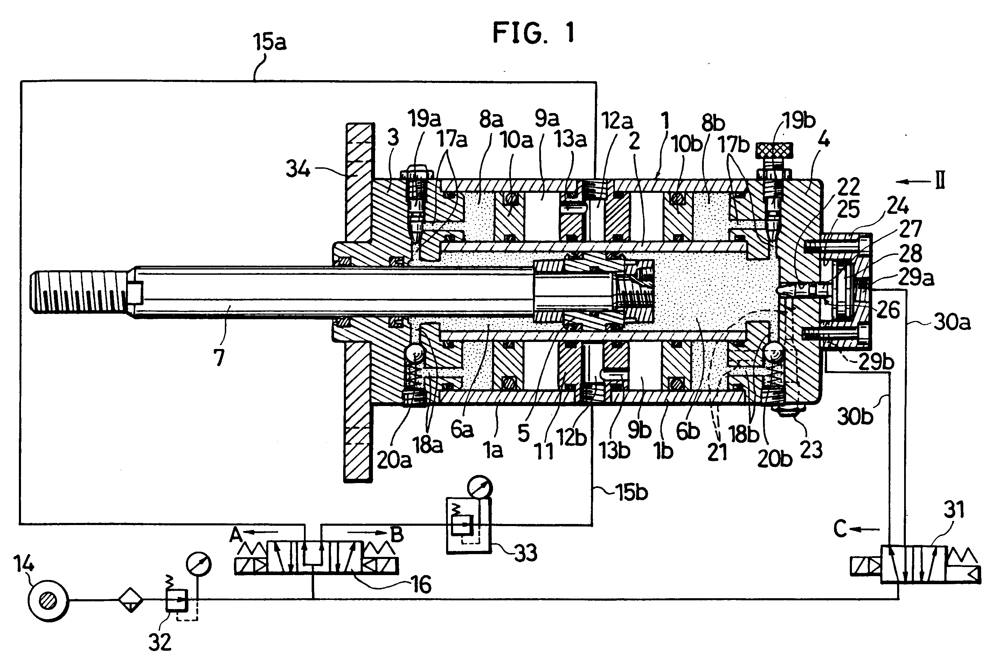

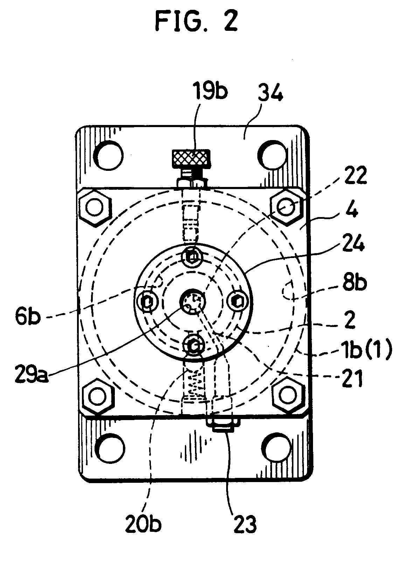

Referring to Figures 1 and 2 of the accompanying drawings, there is shown a hybrid cylinder device according to a first embodiment of the present invention. This cylinder device includes an outer tube 1, and an inner tube 2 arranged coaxially with the outer tube but spaced radially therefrom. The respective tubes have front ends hermetically closed by a common front cover 3. Similarly, the respective tubes have rear ends hermetically closed by a common rear cover 4.

An actuating piston 5 is slidably guided in the inner tube 2. This piston hermetically separates the interior space of the inner tube into a first inner oil chamber 6a closer to the front cover 3, and a second inner oil chamber 6b closer to the rear cover 4. The piston is connected to a piston rod 7 which extends forward to hermetically penetrate through the front cover 3.

The annular space formed between the respective tubes 1, 2 is divided into four chambers which include a first outer oil chamber 8a, a second outer oil chamber 8b, a first air chamber 9a, and a second air chamber 9b. The first outer oil chamber 8a and the first air chamber 9a are associated with the first inner oil chamber 6a, and separated hermetically from each other by a first annular interface piston 10a slidably guided between the respective tubes 1, 2. The second outer oil chamber 8b and the second air chamber 9b are associated with the second inner oil chamber 6b, and separated hermetically from each other by a second annular interface piston 10b slidably guided between the respective tubes.

According to the illustrated embodiment, the outer tube 1 has two tube segments which include a first tube segment 1a defining the first outer oil chamber 8a and the first air chamber 9a, and a second tube segment 1b providing the second outer oil chamber 8b and the second air chamber 9b. The first and second tube segments 1a, 1b are hermetically separated from each other but joined together by means of an intermediate annular connector 11.

The annular connector 11 has a first radial air supply port 12a communicating with the first air chamber 9a through a first communication passage 13a. The connector further has a second radial air supply port 12b communicating with the second air chamber 9b through a second communication passage 13b. The first and second air supply ports 12a, 12b are selectively connectable to a compressed air source 14 and to the atmosphere by way of main air lines 15a, 15b and a first or main changeover valve 16, as more clearly described hereinafter.

The front cover 3 is formed with a first flow control passage 17a, and a first return passage 18a. These passages establish communication between the first inner oil chamber 6a and the first outer oil chamber 8a. The flow of the working oil through the first flow control passage 17a is adjustably controlled by a first flow regulating valve 19a mounted to the front cover. A first check valve 20a is disposed in the first return passage 18a, so that the working oil can flow through the return passage only from the first inner oil chamber 6a to the first outer oil chamber 8a.

Similarly, the rear cover 4 is formed with a second flow control passage 17b, and a second return passage 18b. These passages establish communication between the second inner oil chamber 6b and the second outer oil chamber 8b. The flow of the working oil through the second flow control passage 17b is adjustably controlled by a second flow regulating valve 19b mounted to the rear cover. A second check valve 20b is disposed in the second return passage 18b, so that the working oil can flow through the second return passage only from the second inner oil chamber 6b to the second outer oil chamber 8b.

According to the illustrated embodiment, the rear cover 4 is further provided with an auxiliary flow control passage 21 communicating with the second outer oil chamber 8b. This auxiliary passage also communicates with a central bore 22 of the rear cover 4 which in turn communicates with the second inner oil chamber 6b. The oil flow through the auxiliary passage 21 is controlled by an auxiliary flow regulating valve 23 mounted to the rear cover.

Mounted externally to the rear cover 4 is a mode control box 24 which defines a valve seating space 25. A mode control valve 26 is housed in the mode control box 24. More specifically, the mode control valve, which is in the form of a needle valve according to the illustrated embodiment, comprises a needle 27 hermetically and slidably guided in the central bore 22 of the rear cover 4, and a pressure receiving disc 28 hermetically and slidably guided in the valve seating space 25 of the mode control box.

The mode control box 24 is formed with a first control port 29a communicating with the valve seating space 25 on one side (rear side) of the valve disc 28. The mode control box is further formed with a second control port 29b communicating with the valve seating space on the other side (front side) of the valve disc. The respective control ports 29a, 29b are selectively connectable to the compressor 14 by way of respective auxiliary air lines 30a, 30b and a second or auxiliary changeover valve 31. Thus, the valve needle 24 moves back and forth when the compressed air is selectively introduced through the respective control ports 29a, 29b. Such reciprocating movement of the valve needle causes opening and closing of the auxiliary flow control passage 21 relative to the second inner oil chamber 6b, as more clearly described hereinafter.

In operation, the air compressor 14 continuously supplies compressed air to the respective changeover valves 16, 31. The air pressure supplied to the changeover valves 16, 31 is adjusted at a predetermined level by a main pressure control valve 32. When the main changeover valve 16 assumes its neutral position shown in Figure 1, the compressed air is simultaneously fed into the respective air chambers 9a, 9b through the main air lines 15a, 15b.

As appreciated in Figure 1, the actuating piston 5 provides a smaller pressure receiving area in the first inner oil chamber 6a than in the second inner oil chamber 6b due to the presence of the piston rod 7 in the first inner oil chamber. Therefore, if the same pressure is simultaneously applied to the respective air chambers 9a, 9b to equally pressurize the oil in the first and second inner oil chambers 6a, 6b through pressurization in the first and second outer oil chambers 8a, 8b, the total force tending to move the actuating piston 5 leftward in Figure 1 becomes larger than the total force tending to move the actuating piston rightward, thereby causing the actuating piston to move leftward as a net result. Thus, it is necessary to apply different pressures through the main air lines 15a, 15b to retain or hold the actuating piston 5 or the piston rod 7 at a fixed axial position.

According to the embodiment illustrated in Figure 1, one main air line 15b is provided with a second pressure control valve (pressure relief valve) 33 which is designed so that the air pressure is smaller at the second air supply port 12b than at the first air supply port 12a. Such an inlet pressure difference compensates for the above-mentioned difference in the pressure receiving area of the actuating piston 5 on both sides thereof. In this way, equal counteracting forces act on the actuating piston to stop it at any axial position when the main changeover valve 16 is brought to its neutral position. Obviously, the second pressure control valve 33 is designed to relieve air at a lower pressure level than the main pressure control valve 32.

It is now supposed that the mode control valve 26 takes the position of Figure 1 wherein the needle 27 assumes its retreated position to open the auxiliary flow control passage 21. In this condition, the auxiliary changeover valve 31 takes its rightward position shown in Figure 1, so that the second control line 30b is connected to the compressor 14, while the first control line 30a opens into the atmosphere.

Under the above condition, when the main changeover valve 16 is shifted in the direction of an arrow A in Figure 1, the second air supply port 12b alone is connected to the compressor 14 through the line 15b, whereas the first air supply port 12a is held open to the atmosphere through the other line 15a. As a result, the second air chamber 9b expands to move the second interface piston 10b rightward in Figure 1 by displacing the oil in the second outer oil chamber 8b into the second inner oil chamber 6b through the second flow control passage 17b as well as through the auxiliary flow control passage 21. Obviously, the second return passage 18b is not effective at this time because it allows the oil flow only from the second inner oil chamber 6b to the second outer oil chamber 8b. In this way, the actuating piston 5 together with the piston rod 7 is caused to advance. It should be appreciated that the advancing speed of the piston rod can be precisely controlled by regulating the oil flow through the second flow control passage 17b and the auxiliary flow control passage 21, i.e., by adjusting the second flow regulating valve 19b and the auxiliary flow regulating valve 23.

On the other hand, the advancing movement of the piston 5 causes a volumetric reduction of the first inner oil chamber 6a, thereby displacing the oil therein into the first outer oil chamber 8a mainly through the first return passage 18a (the first check valve 20a) and partially through the first flow control passage 17a. As a result, the first interface piston 10a moves rightward in Figure 1 to expel the air from the first air chamber 9a into the atmosphere.

When the main changeover valve 16 is shifted in the direction of an arrow B in Figure 1, the first air supply port 12a is connected to the compressor 14 through the line 15a, whereas the second air supply port 12b is rendered open to the atmosphere through the other line 15b. Such shifting causes the actuating piston 5 together with the piston rod 7 to retreat substantially in the same manner as already described above. The retreating speed of the piston rod 7 can be precisely or finely adjusted by controlling the first flow regulating valve 19a.

When the auxiliary changeover valve 31 is shifted in the direction of an arrow C, the first control line 30a is connected to the compressor 14, whereas the second control line 30b is rendered open to the atmosphere. As a result, the valve needle 27 advances to close the auxiliary flow control passage 21. Thus, only the second flow control passage 17b remains effective, so that the advancing speed of the piston rod 7 is drastically reduced when the main changeover valve 16 is shifted in the direction of the arrow A in Figure 1. In other words, the advancing speed of the piston rod 7 can be varied stepwise by advancing and retreating the mode control valve 26 in addition to being steplessly adjusted by controlling the second flow regulating valve 19b and/or the auxiliary flow regulating valve 23. Such stepwise speed control may be utilized to enable a faster advancing stroke at the initial stage of position setting and a slower advancing stroke at the ending stage of position setting, thereby assuring a quick but exact position setting as a whole.

The hybrid cylinder device according to the present invention may be mounted to a suitable position of a relevant apparatus such as machine tool by using a mounting flange 34.

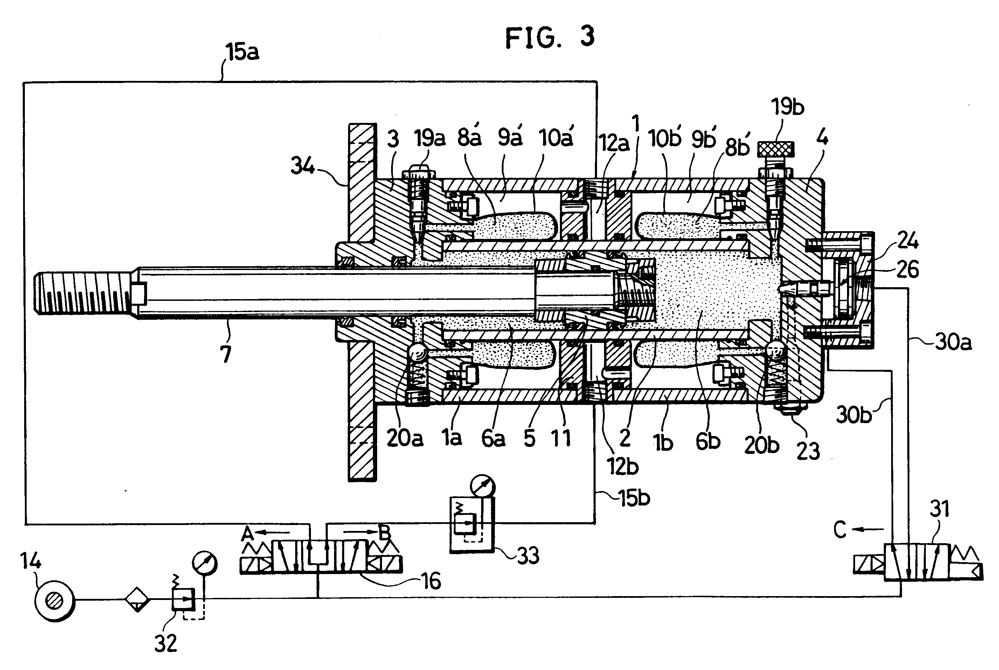

Figure 3 shows another hybrid cylinder device according to a second embodiment of the present invention. This modified cylinder device comprises a first outer oil chamber 8a' formed within a first interface rubber bag or bladder 10a', and a second outer oil chamber 8b' formed within a second interface rubber bag or bladder 10b'. The first and second bladders 10a', 10b' are respectively disposed within first and second air chambers 9a', 9b', so the volume of each bladder expands and contracts in response to pressure variations within the corresponding air chamber. The second embodiment is otherwise the same as the first embodiment.

According to the second embodiment, the respective bladders 10a', 10b' provide a larger pressure receiving area than the interface pistons 10a, 10b of the foregoing embodiment. Therefore, the cylinder device of the second embodiment is capable of providing a larger output than that of the first embodiment.

As clearly understood from the foregoing embodiments, the cylinder device according to the present invention relies on the compressed air source (compressor) 14 to take a drive power required for operation. Thus, it is not necessary to use special equipments, such as pipings, tanks and pumps, for constituting a hydraulic circuit whose requirements are much stricter than for a pneumatic circuit. Further, the air is infinitely available at all times, and may be discharged into the environment without inviting any pollution problems. In the case of a hydraulic circuit, a measure must be taken to compensate for losses of the working oil, whereas the pneumatic circuit does not call for such compensation to make the system substantially free of maintenance.

On the other hand, the cylinder device of the present invention also incorporates hydraulic portions to enable fine adjustment or control of operation. For example, the flow control passages 17a, 17b, 21 are hydraulic portions which rely only on the flow of the working oil which is substantially an incompressible fluid. Therefore, the oil flow through these control passages can be reliably adjusted by the corresponding flow regulating valves to enable exact speed or stroke control of the piston rod 7. As opposed to the hydraulic control, the pneumatic control can provide only approximate adjustment due to easy compressibility of the air.

In either of the two embodiments, the combination of the first inner oil chamber 6a and the first outer oil chamber 8a (8a') forms one hydraulic unit acting on one side of the actuating piston 5, whereas the combination of the second inner oil chamber 6b and the second outer oil chamber 8b (8b') forms another hydraulic unit acting on the other side of the actuating piston. In each hydraulic unit, the outer oil chamber serves as an pressure input portion for receiving the pressure from the corresponding air chamber, while the inner oil chamber serves as an pressure output portion for applying the thus received pressure to the actuating piston 5.

Obviously, the respective input oil chambers 8a, 8b (8a', 8b') of the two hydraulic units need not be arranged radially outwardly of the corresponding output oil chambers 6a, 6b as long as the input oil chambers are connected to the output oil chambers through the flow control passages 17a, 17b and arranged to adjoin the relevant air chambers 9a, 9b (9a', 9b'). Thus, the use of the two coaxial tubes 1, 2 is not always necessary.

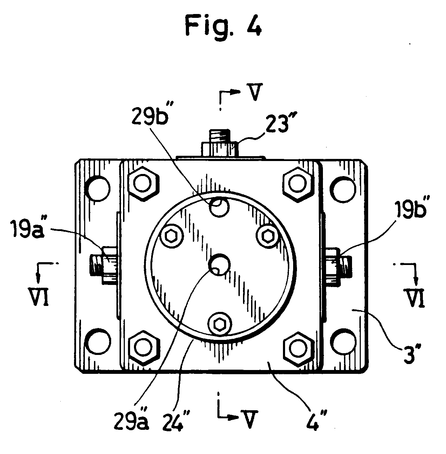

Figures 4 to 6 show a hybrid cylinder device according to a third embodiment of the present invention. The third embodiment basically differs from the foregoing embodiments in that a single hydraulic unit is used to hydraulically control piston rod movement in both axial directions.

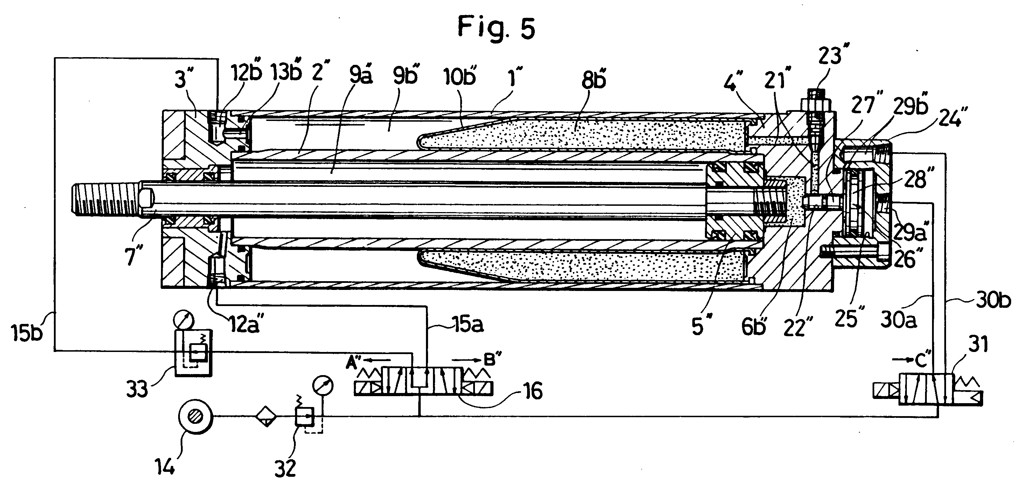

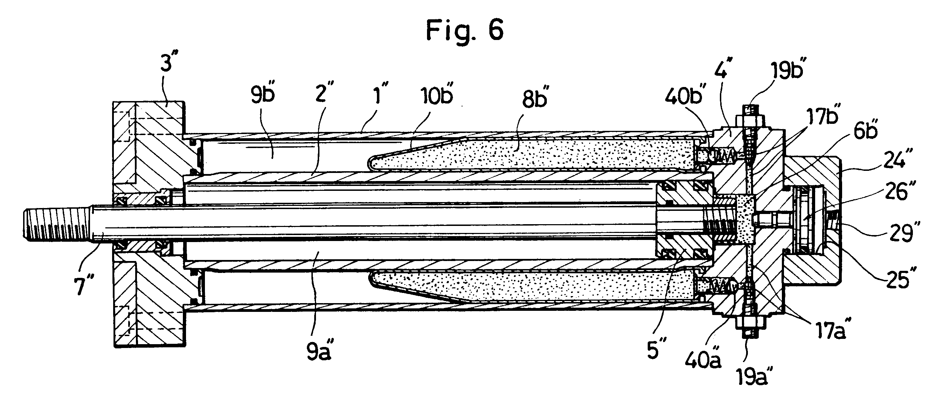

Specifically, the cylinder device according to the third embodiment comprises an outer tube 1'', and an inner tube 2'' arranged coaxially within the outer tube, the two tubes being hermetically closed at both ends by a front cover 3'' and a rear cover 4''. Both tubes are rendered sufficiently long to provide a large reciprocating stroke for an actuating piston 5'' which is slidably guided in the inner tube to carry a piston rod 7''. In Figures 5 and 6, the piston is shown in its retreating limit position.

According to the third embodiment, a first air chamber 9a'' is arranged within the inner tube 1'' to directly adjoin the actuating piston 5''. The first air chamber receives air supply through a first air supply port 12a'' formed in the front cover 3''. The annular space between the two tubes 1'', 2'' is used only to provide a second air chamber 9b'' and a single outer liquid chamber (input liquid chamber) 8b'' separated from the second air chamber by means of an annular interface rubber bag 10b''. The front cover 3'' is formed with a second air supply port 12b'' and a communication passage 13b'' for supplying air into the second air chamber. The rubber bag is hermetically connected to the rear cover 4''.

The rear cover 4'' is formed with a first flow control passage 17a'' and a second flow control passage 17b'', as shown in Figure 6. These flow control passages are respectively provided with first and second flow regulating valves 19a'', 19b'', and establish communication between the outer liquid chamber 8b'' and an inner liquid chamber (output liquid chamber) 6b''. The inner liquid chamber is partially formed in the rear cover, but most of it provided in the inner tube 2'' on the side of the piston opposite the first air chamber 9a'' when the piston 5'' assumes an advanced position.

As shown in Figure 6, the first flow control passage 17a'' is further provided with a first check valve 40a'' which allows liquid flow only from the inner liquid chamber 6b'' to the outer liquid chamber 8b''. Similarly, the second flow control passage 17b'' is further provided with a second check valve 40b'' which permits liquid flow only from the outer liquid chamber to the inner liquid chamber. The purpose of these check valves will be described later.

The rear cover 4'' is further formed therein with an auxiliary flow control passage 21'' which communicates with the outer liquid chamber 8b'' and a central bore 22'' of the rear cover, as shown in Figure 5. The liquid flow through the auxiliary flow control passage can be controlled by an auxiliary flow regulating valve 23'' mounted on the rear cover. The purpose of the auxiliary flow control passage is to provide a stepwise speed control for the piston 5'', as is the case with the foregoing embodiments. However, according to the third embodiment, such stepwise speed control is possible both with respect to the advancing and retreating strokes of the piston, as described hereinafter.

Similarly to the foregoing embodiments, the central bore 22'' of the rear cover 4'' slidably receives a valve needle 27'' of a mode control valve 26'' which further has a pressure receiving disc 28'' slidably guided within a mode control box 24''. This mode control box is mounted on the rear cover, and has an inner space 25'' for receiving the valve disc. The mode control box further has a first control port 29a'' for feeding air into the box inner space on one side of the valve disc, and a second control port 29b'' for supplying air into the box inner space on the other side of the valve disc.

The pneumatic circuitry for driving the cylinder device of the third embodiment is substantially the same as already described in connection with the foregoing embodiments. Thus, such circuitry is not described here to avoid duplication.

It is now assumed that the valve needle 27'' takes its advanced position shown in Figure 5 to close the auxiliary flow control passage 21'' relative to the central bore 22''. Thus, the auxiliary flow control passage is ineffective. In this condition, when the main changeover valve 16 is shifted in the direction of an arrow A'' from the illustrated neutral position, the second air chamber 9b'' receives compressed air, whereas the first air chamber 9a'' is held open to the atmosphere. As a result, the outer liquid chamber 8b'' reduces in volume by deformation of the rubber bag 10b'', and the oil therein flows through the second flow control passage 17b'' (Figure 6) into the inner liquid chamber 6b'' which thus increases in volume. Such volumetric increase of the inner liquid chamber causes the piston 5'' together with the piston rod 7'' to advance.

During the advancing stroke of the piston 5'', the second check valve 40b'' allows oil flow from the outer liquid chamber 8b'' to the inner liquid chamber 6b'' to thereby make effective the second flow control passage 17b'' and the second flow regulating valve 19b''. On the other hand, the first check valve 40a'' prohibits oil flow in the same flow direction to hold ineffective the first flow control passage 17a'' and the first flow regulating valve 19a''. Thus, the advancing stroke of the piston is accurately controlled only by the setting of the second flow regulating valve.

When the main changeover valve 16 is shifted in the direction of an arrow B'', the first air chamber 9a'' receives compressed air to directly act on the piston 5'', while the second air chamber 9b'' is held open to the atmosphere. As a result, the piston retreats to volumetrically reduce the inner liquid chamber 6b'', causing the oil to flow through the first flow control passage 17a'' into the outer liquid chamber 8b''. Due to the one-way flow function of the second check valve 40b'', the second flow control passage 17b'' together with the second flow regulating valve 19b'' is held ineffective. Thus, the retreating or returning movement of the piston is precisely controlled solely by the setting of the first flow regulating valve 19a''.

When the auxiliary changeover valve 31 is shifted in the direction of an arrow C'', the valve needle 27'' retreats to open the auxiliary flow control passage 21'' relative to the central bore 22''. This auxiliary flow control passage, as long as it is thus open, allows oil flow from the outer liquid chamber 8b'' to the inner liquid chamber 6b'' and vice versa. Therefore, it is possible to control the moving speed of the piston 5'' in a stepwise fashion both in the advancing and retreating directions by opening and closing the auxiliary flow control passage.

The third embodiment illustrated in Figures 4 to 6 is advantageous in that the single hydraulic unit is utilized to hydraulically control the piston movement in both axial directions, thereby simplifying the overall structure of the bidirectional control type cylinder device. Further, the reciprocating stroke of the piston 5'' can be made large by enlarging the maximum volume of the rubber bag 10b'' (i.e. the outer liquid chamber 8b'') since a considerable portion of the annular space between the two tubes 1'', 2'' can be used for arranging the rubber bag.

The present invention being thus described, it is obvious that the same may be varied in many other ways. For instance, the cylinder device of the present invention does not necessarily require the auxiliary flow control passage 21, 21'', the auxiliary flow regulating valve 23, 23'', the central bore 22, 22'', the mode control box 24, 24'', the mode control valve 26, 26'', and the auxiliary changeover valve 31, 31'' if the stepwise speed control of the piston rod 7, 7'' is not called for. Such variations are not to be regarded as a departure from the spirit and scope of the present invention, and all such modifications as would be obvious to those skilled in the art are intended to be included within the scope of the following claims.

## Claims

1. A hydraulic-pneumatic cylinder device comprising: tubular housing means (1, 1'', 2, 2'') hermetically closed at both ends; an actuating piston (5, 5'') axially slidably guided within said tubular housing means; a piston rod (7, 7'') connected to said piston and axially extending in said housing means to project out through one end thereof; an air chamber (9b, 9b', 9b'') disposed within said housing means, said air chamber being pressurizable to cause movement of said piston in one axial direction; a hydraulic unit associated with said air chamber and arranged within said housing means to act on one side of said piston, said hydraulic unit including an input liquid chamber (8b, 8b', 8b'') adjoining said air chamber via interface means (10b, 10b', 10b''), an output liquid chamber (6b, 6b'') adjoining said one side of said actuating piston, and at least one flow control passage (17b, 17b'') provided with adjustable flow control means (19b, 19b'') and communicating with said input and output liquid chambers, said interface means being capable of allowing volumetric variation of said input liquid chamber, said output liquid chamber being variable in volume in complementary relation to the volumetric variation of said input liquid chamber to cause axial movement of said actuating piston; and complementing means (6a, 8a, 8a', 9a, 9a', 9a'') arranged within said housing means to act on the other side of said piston for causing movement thereof in the opposite axial direction, characterized in that:
said hydraulic unit further comprises at least one auxiliary flow control passage (21, 21'') provided with adjustable flow control means (23, 23'') and communicatable with said input and output liquid chambers (8b, 8b', 8b'', 6b, 6b''), said auxiliary flow control passage being selectively openable and closable by a mode control valve (26, 26'') which is controlled pneumatically.

2. The cylinder device as defined in claim 1, wherein said interface means is in the form of an interface piston (10b) slidably guided in said housing means and arranged between said input liquid chamber (8b) and said air chamber (9b).

3. The cylinder device as defined in claim 1, wherein said interface means is in the form of a flexible bag (10b', 10b'') defining therein said input liquid chamber (8b', 8b'').

4. The cylinder device as defined in any one of claims 1 to 3, wherein said complementing means comprises an additional air chamber (9a, 9a', 9a'') arranged within said housing means (1, 1'', 2, 2''), said additional air chamber being pressurizable to cause movement of said piston (5, 5'') in said opposite axial direction.

5. The cylinder device as defined in claim 4, wherein one (9a, 9a', 9a'') of said air chambers receives a higher air pressure than the other air chamber (9b, 9b', 9b'').

6. The cylinder device as defined in claim 4, wherein said complementing means further comprises an additional hydraulic unit associated with said additional air chamber (9a, 9a') and arranged within said housing means (1, 2) to act on said other side of said actuating piston (5); and said additional hydraulic unit includes an additional input liquid chamber (8a, 8a') adjoining said additional air chamber via additional interface means (10a, 10a'), an additional output liquid chamber (6a) adjoining said other side of said piston, and at least one additional flow control passage (17a) provided with additional adjustable flow control means (19a) and communicating with said additional input and output liquid chambers, said additional interface means being capable of allowing volumetric variation of said additional input liquid chamber, said additional output liquid chamber being variable in volume in complemetary relation to the volumetric variation of said additional input liquid chamber to cause axial movement of said piston.

7. The cylinder device as defined in claim 6, wherein each of said hydraulic units further comprises at least one return passage (18a, 18b) communicating with the corresponding input and output liquid chambers (8a, 8a', 8b, 8b', 6a, 6b), said return passage being provided with a check valve (20a, 20b) which allows liquid flow only from said corresponding output liquid chamber to said corresponding input liquid chamber.

8. The cylinder device as defined in claim 6 or 7, wherein said additional interface means is in the form of an interface piston (10a) slidably guided in said housing means (1, 2) and arranged between said additional input liquid chamber (8a) and said additional air chamber (9a).

9. The cylinder device as defined in claim 6 or 7, wherein said additional interface means is in the form of a flexible bag (10a') defining therein said additional input liquid chamber (8a').

10. The cylinder device as defined in claim 4, wherein said additional air chamber (9a'') directly adjoins said other side of said actuating piston (5'').

11. The cylinder device as defined in claim 10, wherein said flow control passage (17b'') is provided with a check valve (40b'') for allowing liquid flow only from said input liquid chamber (8b'') to said output liquid chamber (6b''), said hydraulic unit further including an additional flow control passage (17a'') which is provided with adjustable flow control means (19a'') and communicating with said input and output liquid chambers (8b'', 6b''), said additional flow control passage being further provided with an additional check valve (40a'') for allowing liquid flow only from said output liquid chamber to said input liquid chamber.

12. The cylinder device as defined in claim 4, wherein said housing means comprises an inner tube (2, 2'') in which said actuating piston (5, 5'') is slidably guided, and an outer tube (1, 1'') arranged coaxially with said inner tube to define an annular space around said inner tube, said output liquid chamber (6b, 6b'') being arranged within said inner tube on said one side of said actuating piston, said input liquid chamber (8b, 8b', 8b'') and the corresponding air chamber (9b, 9b', 9b'') being arranged in said annular space and separated from each other by said interface means (10b, 10b, 10b'').

13. The cylinder device as defined in claim 12, wherein said interface means is in the form of an annular interface piston (10b) which is slidably guided within said annular space.

14. The cylinder device as defined in claim 12, wherein said interface means is in the form of an interface rubber bag (10b', 10b'') which is arranged within said annular space to define therein said input liquid chamber (8b', 8b'').

15. The cylinder device as defined in claim 12, wherein said housing means further comprises a pair of end covers (3, 3'', 4, 4'') hermetically closing said inner and outer tubes (1, 1'', 2, 2'') at both ends of said housing means, one end cover (4, 4'') being formed therein with said flow control passage (17b, 17b''), said flow control means being in the form of a flow regulating valve (19b, 19b'') mounted on said one end cover to project into said flow control passage.

16. The cylinder device as defined in claim 15, wherein said one end cover (4, 4'') is further formed with a central bore (22, 22'') as well as with an auxiliary flow control passage 21, 21''), said auxiliary flow control passage being provided with an auxiliary flow regulating valve (23, 23'') mounted on said one end cover, said central bore communicating with said output liquid chamber (6b, 6b''), said auxiliary flow control passage communicating with said input chamber (8b, 8b', 8b'') and opening into said central bore, said central bore slidably guiding a valve needle (27, 27'') of a mode control valve (26, 26'') to selectively open and close said auxiliary flow control passage relative to said central bore in response to sliding movement of said valve needle.

17. The cylinder device as defined in claim 16, wherein said mode control valve (26, 26'') has a pressure receiving disc (28, 28'') slidably guided within an inner space (25, 25'') of a mode control box (24, 24'') which is mounted to said one end cover (4, 4''), said mode control box being formed with a first port (29a, 29a'') for allowing air entry into said inner space on one side of said disc as well as a second port (29b, 29b'') for allowing air entry into said inner space on the other side of said disc.

18. The cylinder device as defined in any one of claims 15 to 17, wherein said additional air chamber (9a, 9a') is arranged within said annular space between said inner and outer tubes (2, 1); and said complementing means further comprises an additional hydraulic unit associated with said additional air chamber to act on said other side of said actuating piston (5).

19. The cylinder device as defined in claim 18, wherein said additional hydraulic unit includes an additional input liquid chamber (8a, 8a') arranged within said annular space to adjoin said additional air chamber (9a, 9a') via additional interface means (10a, 10a'), an additional output liquid chamber (6a) arranged within said inner tube (2) to adjoin said other side of said piston (5), and at least one additional flow control passage (17a) formed in the other end cover (3) to communicate with said additional input and output liquid chambers, said additional flow control passage being provided with an additional flow regulating valve (19a) mounted on said other end cover to project into said additional flow control passage, said additional interface means being capable of allowing volumetric variation of said additional input liquid chamber, said additional output liquid chamber being variable in volume in complementary relation to the volumetric variation of said additional input liquid chamber to cause axial movement of said piston.

20. The cylinder device as defined in claim 19, wherein each of said end covers (3, 4) is further formed with a return passage (18a, 18b) communicating with the corresponding input and output liquid chambers (8a, 8a', 8b, 8b', 6a, 6b), said return passage being provided with a check valve (20a, 20b) mounted on said each end cover for allowing liquid flow only from said corresponding output liquid chamber to said corresponding input liquid chamber.

21. The cylinder device as defined in claim 19 or 20, wherein said additional interface means is in the form of an annular interface piston (10a) which is slidably guided within said annular space.

22. The cylinder device as defined in claim 19 or 20, wherein said additional interface means is in the form of an interface rubber bag (10b') which is arranged within said annular space to define therein said additional input liquid chamber (8b').

23. The cylinder device as defined in any one of claims 19 to 22, wherein said outer tube (1) comprises a pair of tubular segments (1a, 1b) hermetically separated from each other but joined together by means of an annular intermediate connector (11), said two air chambers being arranged respectively on both sides of said intermediate connector within said annular space, said intermediate connector having a first air supply port (12a) communicating with one of said air chambers, said intermediate connector further having a second air supply port (12b) communicating with the other air chamber.

24. The cylinder device as defined in claim 15, wherein said additional air chamber (9a'') is arranged within said inner tube (2'') to directly adjoin said other side of said actuating piston (5'').

25. The cylinder device as defined in claim 24, wherein said flow control passage (17b'') is provided with a check valve (40b'') for allowing liquid flow only from said input liquid chamber (8b'') to said output liquid chamber (6b''), said one end cover (4'') being further formed therein with an additional flow control passage (17a'') which is provided with an additional flow regulating valve (19a'') mounted on said one end cover to project into said additional flow control passage, said additional flow control passage further being provided with an additional check valve (40a'') for allowing liquid flow only from said output liquid chamber to said input liquid chamber.

26. The cylinder device as defined in claim 24 or 25, wherein the other end cover (3'') is formed with a first air supply port (12a'') communicating with one of said two air chambers, said other end cover being further formed with a second air supply port (12b'') communicating with the other air chamber.

## Patentansprüche

1. Hydropneumatische Zylindervorrichtung, mit:
einer rohrförmigen Gehäuseeinrichtung (1, 1'', 2, 2''), die an beiden Enden hermetisch geschlossen ist; einem Betätigungskolben (5, 5''), der axial verschiebbar innerhalb der rohrförmigen Gehäuseeinrichtung geführt ist; einer Kolbenstange (7, 7''), die mit dem Kolben verbunden ist und sich in axialer Richtung in die Gehäuseeinrichtung erstreckt durch ein Ende derselben vorstehend; einer Luftkammer (9b, 9b', 9b''), die innerhalb der Gehäuseeinrichtung angeordnet ist, wobei die Luftkammer zur Veranlassung einer Bewegung des Kolbens in einer axialen Richtung unter Druck setzbar ist; einer hydraulischen Einheit, die der Kammer Zugeordnet ist und innerhalb der Gehäuseeinrichtung zur Beaufschlagung einer Seite des Kolbens angeordnet ist, wobei zu der hyraulischen Einheit eine Flüssigkeitseingabekammer (8b, 8b', 8b''), die sich an die Luftkammer über eine Zwischenanordnung (10 b, 10b', 10b'') anschließt, eine Flüssigkeitsabgabekammer (6b, 6b''), die sich an einer Seite des Betätigungskolbens anschließt, und wenigstens ein Strömungssteuerkanal (17b, 17b'') gehören, der mit einer einstellbaren Strömungssteuereinrichtung (19b, 19b'') versehen ist und mit der Flüssigkeitseingabekammer und der Flüssigkeitsabgabekammer kommuniziert, wobei mittels der Zwischenanordnung die Flüssigkeitsabgabekammer im Volumen variierbar ist, wobei die Flüssigkeitsabgabekammer in ihrem Volumen in komplementärer Beziehung zu der Volumenvariation der Flüssigkeitseingabekammer zur Veranlassung einer axialen Bewegung des Betätigungskolbens variierbar ist; und mit einer Ergänzungseinrichtungen (6a, 8a, 8a', 9a, 9a', 9a''), die innerhalb der Gehäuseeinrichtung für das Beaufschlagen der anderen Seite des Kolbens für das Veranlassen von dessen Bewegung in der entgegengesetzten axialen Richtung angeordnet sind, dadurch gekennzeichnet, daß die hydraulische Einheit weiterhin wenigstens einen Strömungssteuer-Hilfskanal (21, 21'') aufweist, der mit einer einstellbaren Strömungssteuereinrichtung (23, 23'') versehen und mit der Flüssigkeitseingabe- und der Flüssigkeitsabgabekammer (8b, 8b', 8b'', 6b, 6b'') verbindbar ist, wobei der Strömungssteuer - Hilfskanal wahlweise mittels eines Modussteuerventils (26, 26'') zu öffnen und schließbar ist, das pneumatisch gesteuert ist.

2. Zylindervorrichtung nach Anspruch 1, bei der die Zwischenanordnung die Form eines Zwischenkolbens (10b) besitzt, der gleitend verschiebbar in der Gehäuseeinrichtung geführt und zwischen der Flüssigkeitseingabekammer (8b) und der Luftkammer (9b) angeordnet ist.

3. Zylindervorrichtung nach Anspruch 1, bei der die Zwischenanordnung die Form eines flexiblen Beutels (10b', 10b'') besitzt, in dem die Flüssigkeitseingabekammer (8b', 8b'') gebildet ist.

4. Zylindervorrichtung nach einem der Ansprüche 1 bis 3, bei der die Ergänzungseinrichtung eine zusätzliche Luftkammer (9a, 9a', 9a'') aufweist, die innerhalb der Gehäuseeinrichtung (1, 1'', 2, 2'') angeordnet ist, wobei die zusätzliche Luftkammer zur Veranlassung einer Bewegung des Kolbens (5, 5'') in der entgegengesetzten axialen Richtung unter Druck setzbar ist.

5. Zylindervorrichtung nach Anspruch 4, bei der eine (9a, 9a', 9a'') der Luftkammern einen höheren Luftdruck aufnimmt als die andere Luftkammer (9b, 9b', 9b'').

6. Zylindervorrichtung nach Anspruch 4, bei der die Ergänzungseinrichtung weiterhin eine zusätzliche hydraulische Einheit aufweist, die der zusätzlichen Luftkammer (9a, 9a') zugeordnet und innerhalb der Gehäuseeinrichtung (1, 2) zur Beaufschlagung der anderen Seite des Betätigungskolbens (5) angeordnet ist; und wobei zu der zusätzlichen hydraulischen Einheit eine zusätzliche Flüssigkeitseingabekammer (8a, 8a'), die an die zusätzliche Luftkammer über eine zusätzliche Zwischenanordnung (10a, 10a') angrenzt, eine zusätzliche Flüssigkeitsabgabekammer (6a), die an die andere Seite des Kolbens anschließt, und wenigstens ein zusätzlicher Strömungssteuerkanal (17a) gehören, der mit einer zusätzlichen einstellbaren Strömungssteuereinrichtung (19a) versehen ist und mit der zusätzlichen Flüssigkeitseingabekammer und der zusätzlichen Flüssigkeitsabgabekammer kommuniziert, wobei durch die zusätzliche Zwischenanordnung die zusätzliche Flüssigkeitseingabekammer in ihrem Volumen variierbar ist, wobei die zusätzliche Flüssigkeitsabgabekammer in ihrem Volumen in komplementärer Beziehung zu der volumenmäßigen Variation der zusätzlichen Flüssigkeitseingabekammer zur Veranlassung einer axialen Bewegung des Kolbens variierbar ist.

7. Zylindervorrichtung nach Anspruch 6, bei der jede der hydraulischen Einheiten weiterhin wenigstens einen Rückführkanal (18a, 18b) besitzt, der mit der zugehörigen Flüssigkeitseingabekammer und der zugehörigen Flüssigkeitsabgabekammer (8a, 8a', 8b, 8b', 6a, 6b) kommuniziert, wobei der Rückführkanal mit einem Sperrventil (20a, 20b) versehen ist, das eine Flüssigkeitsströmung nur von der zugehörigen Flüssigkeitsabgabekammer zu der zugehörigen Flüssigkeitseingabekammer erlaubt.

8. Zylindervorrichtung nach Anspruch 6 oder 7, bei der die zusätzliche Zwischenanordnung die Form eines Zwischenkolbens (10a) besitzt, der gleitend verschiebbar in der Gehäuseeinrichtung (1, 2) geführt und zwischen der zusätzlichen Flüssigkeitseingabekammer (a) und der zusätzlichen Luftkammer (9a) angeordnet ist.

9. Zylindervorrichtung nach Anspruch 6 oder 7, bei der die zusätzliche Zwischenanordnung die Form eines flexiblen Beutels (10a') besitzt, in dem die zusätzliche Flüssigkeitseingabekammer (8a') gebildet ist.

10. Zylindervorrichtung nach Anspruch 4, bei der die zusätzliche Luftkammer (9a'') unmittelbar an die andere Seite des Betätigungskolbens (5'') anschließt.

11. Zylindervorrichtung nach Anspruch 10, bei der der Strömungssteuerkanal (17b'') mit einem Sperrventil (40b'') versehen ist, das eine Flüssigkeitsströmung nur von der Flüssigkeitseingabekammer (8b'') zu der Flüssigkeitsabgabekammer (6b'') erlaubt, wobei zu der hydraulischen Einheit weiterhin ein zusätzlicher Strömungssteuerkanal (17a'') gehört, der mit einer einstellbaren Strömungssteuereinrichtung (19a'') versehen ist und mit der Flüssigkeitseingabekammer (8b'') und der Flüssigkeitsabgabekammer (6b'') kommuniziert, wobei der zusätzliche Strömungssteuerkanal weiterhin mit einem zusätzlichen Sperrventil (40a'') versehen ist, das eine Flüssigkeitsströmung nur von der Flüssigkeitsabgabekammer zu der Flüssigkeitseingabekammer erlaubt.

12. Zylindervorrichtung nach Anspruch 4, bei der die Gehäuseeinrichtung ein Innenrohr (2, 2''), in dem der Betätigungskolben (5, 5'') gleitend verschiebbar geführt ist, und ein Außenrohr (1, 1'') aufweist, das koaxial zu dem Innenrohr zur Bildung eines ringförmigen Raumes um das Innenrohr angeordnet ist, wobei die Flüssigkeitsabgabekammer (6b, 6b'') innerhalb des Innenrohrs an der einen Seite des Betätigungskolbens angeordnet ist, wobei die Flüssigkeitseingabekammer (8b, 8b', 8b'') und die zugehörige Luftkammer (9b, 9b', 9b'') in dem ringförmigen Raum angeordnet und voneinander durch die Zwischenanordnung (10b, 10b', 10b'') getrennt sind.

13. Zylindervorrichtung nach Anspruch 12, bei der die Zwischenanordnung die Form eines ringförmigen Zwischenkolbens (10b', 10b'') besitzt, der gleitend verschiebbar innerhalb des ringförmigen Raumes geführt ist.

14. Zylindervorrichtung nach Anspruch 12, bei der die Zwischenanordnung die Form eines Zwischengummibeutels (10b', 10b'') besitzt, der innerhalb des ringförmigen Raumes zur Bildung der Flüssigkeitseingabekammer (8b', 8b'') in diesem angeordnet ist.

15. Zylindervorrichtung nach Anspruch 12, bei der die Gehäuseeinrichtung weiterhin ein Paar Endverschlüsse (3, 3'', 4, 4'') besitzt, welche das Innen- und das Außenrohr (1, 1'' bwz. 2, 2'') an beiden Enden der Gehäuseeinrichtung hermetisch schließen, wobei in einem Enddeckel (4, 4'') der Strömungssteuerkanal (17b, 17b'') gebildet ist, wobei die Strömungssteuereinrichtung die Form eines Regulierventils (19b, 19b'') besitzt, das an dem einen Enddeckel in den Strömungssteuerkanal ragend montiert ist.

16. Zylindervorrichtung nach Anspruch 15, bei der der eine Enddeckel (4, 4'') weiterhin mit einer zentralen Bohrung (22, 22'') sowie mit einem Strömungssteuer-Hilfskanal (21, 21'') gebildet ist, wobei der Strömungssteuer-Hilfskanal mit einem Strömungsregulier-Hilfsventil (23, 23'') versehen ist, das an dem einen Enddeckel montiert ist, wobei die zentrale Bohrung mit der Flüssigkeitsabgabekammer (6b, 6b'') kommuniziert, wobei der Strömungssteuer-Hilfskanal mit der Flüssigkeitseingabekammer (8b, 8b', 8b'') kommuniziert und in die zentrale Bohrung öffnet, wobei die zentrale Bohrung gleitend verschiebbar eine Ventilnadel (27, 27'') eines Modus-Steuerventils (26, 26'') zum wahlweisen Öffnen und Schließen des Strömungssteuer-Hilfskanals bezüglich der zentralen Bohrung abhängig von der Gleitbewegung des Nadelventils führt.

17. Zylindervorrichtung nach Anspruch 16, bei der das Modus-Steuerventil (26, 26'') eine Druckaufnahmescheibe (28, 28'') besitzt, die gleitend verschiebbar innerhalb eines Innenraums (25, 25'') einer Modus-Steuerbox (24, 24'') geführt ist, der an dem einen Enddeckel (4, 4'') montiert ist, wobei die Modus-Steuerbox mit einer ersten Öffnung (29a, 29a''), durch die Luft in den Innenraum an einer Seite der Scheibe einlaßbar ist, sowie mit einer zweiten Öffnung (29b, 29b'') gebildet ist, durch die Luft in den Innenraum an der anderen Seite der Scheibe einlaßbar ist.

18. Zylindervorrichtung nach einem der Ansprüche 15 bis 17, bei der die zusätzliche Luftkammer (9a, 9a') innerhalb des ringförmigen Raumes zwischen dem Innenrohr (2) und dem Außenrohr (1) angeordnet ist, und wobei die Ergänzungseinrichtung weiterhin eine zusätzliche hydraulische Einheit besitzt, die der zusätzlichen Luftkammer zur Beaufschlagung der anderen Seite des Betätigungskolbens (5) zugeordnet ist.

19. Zylindervorrichtung nach Anspruch 18, bei der zu der zusätzlichen hydraulischen Einheit eine zusätzliche Flüssigkeitseingabekammer (8a, 8a'), die innerhalb des ringförmigen Raums angrenzend an die zusätzliche Luftkammer (9a, 9a') über eine zusätzliche Zwischenanordnung (10a, 10a') angeordnet ist, eine zusätzliche Flüssigkeitsabgabekammer (6a), die innerhalb des Innenrohrs (2) angrenzend an die andere Seite des Kolbens (5) angeordnet ist, und wenigstens ein zusätzlicher Strömungssteuerkanal (17a) gehören, der in dem anderen Enddeckel (3) zur Kommunikation mit der zusätzlichen Flüssigkeitseingabekammer und der zusätzlichen Flüssigkeitsabgabekammer gebildet ist, wobei der zusätzliche Strömungssteuerkanal mit einem zusätzlichen Strömungsregulierventil (19a) versehen ist, das auf dem anderen Enddeckel in den zusätzlichen Strömungssteuerkanal vorstehend montiert ist, wobei durch die zusätzliche Zwischenanordnung das Volumen der zusätzlichen Flüssigkeitseingabekammer variierbar ist, wobei die zusätzliche Flüssigkeitsabgabekammer in ihrem Volumen in komplementärer Beziehung zu der volumenmäßigen Änderung der zusätzlichen Flüssigkeitseingabekammer zum Veranlassen einer axialen Bewegung des Kolbens variierbar ist.

20. Zylindervorrichtung nach Anspruch 19, bei der jeder der Enddeckel (3, 4) mit einem Rückführkanal (18a, 18b) gebildet ist, der mit der entsprechenden Flüssigkeitseingabe- und Flüssigkeitsabgabekammer (8a, 8a', 8b, 8b', 6a, 6b) kommuniziert, wobei der Rückführkanal mit einem Sperrventil (20a, 20b) versehen ist, das an jedem dieser Enddeckel montiert ist, das eine Flüssigkeitsströmung nur von der zugehörigen Flüssigkeitsabgabekammer zu der zugehörigen Flüssigkeitseingabekammer zuläßt.

21. Zylindervorrichtung nach Anspruch 19 oder 20, bei der die zusätzliche Zwischenanordnung die Form eines ringförmigen Zwischenkolbens (10a) besitzt, der gleitend verschiebbar innerhalb des ringförmigen Raums geführt ist.

22. Zylindervorrichtung nach Anspruch 19 oder 20, bei der die zusätzliche Zwischenanordnung die Form eine Zwischengummibeutels (10b') besitzt, der innerhalb des ringförmigen Raums zur Bildung der zusätzlichen Flüssigkeitseingabekammer (8b') angeordnet ist.

23. Zylindervorrichtung nach einem der Ansprüche 19 bis 22, bei der das Außenrohr (1) ein Paar rohrförmiger Abschnitte (1a, 1b) aufweist, die hermetisch voneinander getrennt, jedoch miteinander mittels eines ringförmigen Zwischenanschlusses (11) verbunden sind, wobei die beiden Luftkammern jeweils an beiden Seiten des Zwischenanschlusses innerhalb des ringförmigen Raums angeordnet sind, wobei der Zwischenanschluß eine erste Luftzuführöffnung (12a) besitzt, die mit einer der Luftkammern kommuniziert, wobei der Zwischenanschluß weiterhin eine zweite Luftzuführöffnung (12b) besitzt, die mit der anderen Luftkammer kommuniziert.

24. Zylindervorrichtung nach Anspruch 15, bei der die zusätzliche Luftkammer (9a'') innerhalb des Innenrohrs (2'') unmittelbar anschließend an die andere Seite des Betätigungskolbens (5'') angeordnet ist.

25. Zylindervorrichtung nach Anspruch 24, bei der der Strömungssteuerkanal (17b'') mit einem Sperrventil (40b'') versehen ist, das eine Flüssigkeitsströmung nur von der Flüssigkeitseingabekammer (8b'') zu der Flüssigkeitsabgabekammer (6b'') zuläßt, wobei in dem einen Enddeckel (4'') weiterhin ein zusätzlicher Strömungssteuerkanal (17a'') gebildet ist, der mit einem zusätzlichen Strömungsregulierventil (19a'') versehen ist, das auf dem einen Enddeckel in den zusätzlichen Strömungssteuerkanal vorstehend montiert ist, wobei der zusätzliche Strömungssteuerkanal weiterhin mit einem zusätzlichen Sperrventil (40a'') versehen ist, das Flüssigkeitsströmung nur von der Flüssigkeitsabgabekammer zu der Flüssigkeitseingabekammer zuläßt.

26. Zylindervorrichtung nach 24 oder 25, bei der der andere Enddeckel (3'') mit einer ersten Luftzuführöffnung (12a'') gebildet ist, der mit einer der beiden Luftkammern kommuniziert, wobei der andere Enddeckel weiterhin mit einer zweiten Luftzuführöffnung (12b'') gebildet ist, die mit der anderen Luftkammer kommuniziert.

## Revendications

1. Vérin hydropneumatique comprenant : des moyens tubulaires faisant corps (1,1'',2,2'') hermétiquement fermés aux deux extrémités ; un piston moteur (5,5'') guidé de façon axialement coulissante dans lesdits moyens tubulaires ; une tige de piston (7,7'') reliée audit piston et s'étendant axialement dans ledit corps de manière à faire saillie à travers une première de ses extrémités ; une chambre d'air (9b,9b',9b'') définie à l'intérieur dudit corps, ladite chambre d'air pouvant être mise en pression pour engendrer un mouvement dudit piston dans une première direction axiale ; une unité hydraulique associée à ladite chambre d'air et agencée à l'intérieur du dit corps de manière à agir sur une première face dudit piston, ladite unité hydraulique comprenant une chambre de liquide d'entrée (8b,8b',8b'') adjacente à ladite chambre d'air par l'intermédiaire de moyens d'interface (10b, 10b',10b''), une chambre de liquide de sortie (6b,6b'') adjacente à ladite première face dudit piston moteur, et au moins un passage de commande d'écoulement (17b,17b'') pourvu de moyens de commande d'écoulement réglables (19b, 19b'') et en communication avec lesdites chambres de liquide d'entrée et de sortie, lesdits moyens d'interface pouvant permettre une variation de volume de ladite chambre de liquide d'entrée, ladite chambre de liquide de sortie étant variable en volume en relation complémentaire à la variation de volume de ladite chambre de liquide d'entrée pour engendrer un mouvement axial dudit piston moteur; et des moyens de rappel (6a,8a,8a',9a,9a',9a'') agencés à l'intérieur dudit corps de manière à agir sur l'autre face dudit piston pour engendrer un mouvement de celui-ci dans la direction axiale opposée, caractérisé en ce que :
ladite unité hydraulique comprend en outre au moins un passage auxiliaire de commande d'écoulement (21, 21'') pourvu de moyens réglables de commande d'écoulement (23,23'') et en communication avec lesdites chambres de liquide d'entrée et de sortie (8b,8b',8b'', 6b,6b''), ledit passage auxiliaire de commande d'écoulement pouvant sélectivement être ouvert et fermé par une vanne de commande de mode (26,26'') qui est commandée pneumatiquement.

2. Vérin suivant la revendication 1, dans lequel lesdits moyens d'interface sont sous la forme d'un piston d'interface (10b) guidé de façon coulissante dans ledit corps et disposé entre ladite chambre de liquide d'entrée (8b) et ladite chambre d'air (9b).

3. Vérin suivant la revendication 1, dans lequel lesdits moyens d'interface sont sous la forme d'une vessie flexible (10b',10b'') définissant intérieurement ladite chambre de liquide d'entrée (8b',8b'').

4. Vérin suivant une quelconque des revendications 1 à 3, dans lequel lesdits moyens de rappel comprennent une chambre d'air additionnelle (9a,9a',9a'') définie à l'intérieur dudit corps (1,1'',2,2''), ladite chambre d'air additionnelle pouvant être mise en pression pour engendrer un mouvement dudit piston (5,5'') dans la dite direction axiale opposée.

5. Vérin suivant la revendication 4, dans lequel une (9a,9a',9a'') desdites chambres d'air reçoit une pression d'air plus élevée que celle de l'autre chambre d'air (9b,9b',9b'').

6. Vérin suivant la revendication 4, dans lequel lesdits moyens de rappel comprennent en outre une unité hydraulique additionnelle associée à ladite chambre d'air additionnelle (9a,9a') et définie à l'intérieur dudit corps (1,2) de manière à agir sur ladite autre face dudit piston moteur (5) ; et ladite unité hydraulique additionnelle comprend une chambre de liquide d'entrée additionnelle (8a,8a') adjacente à ladite chambre d'air additionnelle par l'intermédiaire de moyens d'interface additionnels (10a,10a'), une chambre de liquide de sortie additionnelle (6a) adjacente à ladite autre face dudit piston, et au moins un passage de commande d'écoulement additionnel (17a)pourvu de moyens de commande d'écoulement réglables additionnels (19a) et en communication avec lesdites chambres de liquide d'entrée et de sortie additionnelles, lesdits moyens d'interface additionnels pouvant permettre une variation de volume de ladite chambre de liquide d'entrée additionnelle, ladite chambre de liquide de sortie additionnelle étant variable en volume en relation complémentaire de la variation de volume de ladite chambre de liquide d'entrée additionelle pour engendrer un mouvement axial dudit piston.

7. Vérin suivant la revendication 6, dans lequel chacune desdites unités hydrauliques comprend en outre au moins un passage de retour (18a,18b) qui communique avec les chambres de liquide d'entrée et de sortie correspondantes (8a,8a' ,8b,8b' ,6a,6b), ledit passage de retour étant pourvu d'un clapet anti-retour (20a, 20b) qui permet au liquide de s'écouler seulement de la dite chambre de liquide de sortie correspondante vers la dite chambre de liquide d'entrée correspondante.

8. Vérin suivant la revendication 6 ou 7, dans lequel lesdits moyens d'interface additionnels sont sous la forme d'un piston d'interface (10a) guidé de façon coulissante dans ledit corps (1,2) et agence entre ladite chambre de liquide d'entrée additionnelle (8a) et ladite chambre d'air additionnelle (9a).

9. Vérin suivant la revendication 6 ou 7, dans lequel lesdits moyens d'interface additionnels sont sous la forme d'une vessie flexible (10a') définissant intérieurement ladite chambre de liquide d'entrée additionnelle (8a').

10. Vérin suivant la revendication 4, dans lequel ladite chambre d'air additionnelle (9a'') est directement adjacente à ladite autre face dudit piston moteur (5'').

11. Vérin suivant la revendication 10, dans lequel ledit passage de commande d'écoulement (17b'') est pourvu d'un clapet anti-retour (40b'') pour permettre l'écoulement du liquide seulement de ladite chambre de liquide d'entrée (8b'') vers ladite chambre de liquide de sortie (6b''), ladite unité hydraulique comprenant en outre un passage additionnel de commande d'écoulement (17a'') qui est pourvu de moyens de commande d'écoulement réglables (19a'') et communique avec lesdites chambres de liquide d'entrée et de sortie (8b'',6b''), ledit passage additionnel de commande d'écoulement comportant en outre un clapet anti-retour additionnel (40a'') pour permettre l'écoulement du liquide seulement de ladite chambre de liquide de sortie vers ladite chambre de liquide d'entrée.

12. Vérin suivant la revendication 4, dans lequel ledit corps comprend un tube intérieur (2,2'') dans lequel ledit piston moteur (5,5'') est guidé de façon coulissante, et un tube extérieur (1,1'') disposé coaxialement par rapport audit tube intérieur pour définir un espace annulaire autour dudit tube intérieur, ladite chambre de liquide de sortie (6b,6b'') étant définie à l'intérieur dudit tube intérieur sur ladite première face dudit piston moteur, ladite chambre de liquide d'entrée (8b,8b', 8b'') et la chambre d'air correspondante (9b,9b',9b'') étant agencées dans ledit espace annulaire et séparées l'une de l'autre par lesdits moyens d'interface (10b,10b',10b'').

13. Vérin suivant la revendication 12, dans lequel lesdits moyens d'interface sont sous la forme d'un piston d'interface annulaire (10b) qui est guidé de façon coulissante dans ledit espace annulaire.

14. Vérin suivant la revendication 12, dans lequel lesdits moyens d'interface sont sous la forme d'une vessie d'interface en caoutchouc (10b',10b'') qui est agencée dans ledit espace annulaire pour définir ladite chambre de liquide d'entrée (8b',8b'') dans cet espace.

15. Vérin suivant la revendication 12, dans lequel ledit corps comprend en outre deux couvercles d'extrémité (3,3'',4,4'') fermant hermétiquement les dits tubes intérieur et extérieur (1,1'',2,2'') aux deux extrémités dudit corps,un premier couvercle d'extrémité (4,4'') comportant ledit passage de commande d'écoulement (17b,17b''), lesdits moyens de commande d'écoulement étant sous la forme d'une vanne de réglage d'écoulement (19b,19b'') montée sur ledit premier couvercle d'extrémité de manière à faire saillie dans ledit passage de commande d'écoulement.

16. Vérin suivant la revendication 15, dans lequel ledit premier couvercle d'extrémité (4,4'') comporte en outre un trou central (22,22'') ainsi qu'un passage auxiliaire de commande d'écoulement (21,21''), le dit passage auxiliaire de commande d'écoulement étant pourvu d'une vanne auxiliaire de réglage d'écoulement (23, 23'') montée sur ledit premier couvercle d'extrémité, le dit trou central communiquant avec ladite chambre de liquide de sortie (6b,6b''), ledit passage auxiliaire de commande d'écoulement communiquant avec ladite chambre d'entrée (8b,8b',8b'') et débouchant dans ledit trou central, ledit trou central guidant de façon coulissante une aiguille (27,27'') d'une vanne de commande de mode (26,26'') de manière à ouvrir et fermer sélectivement ledit passage auxiliaire de commande d'écoulement par rapport audit trou central en réponse au mouvement coulissant de ladite aiguille de vanne.

17. Vérin suivant la revendication 16, dans lequel ladite vanne de commande de mode (26,26'') comprend un disque de réception de pression (28,28'') guidé de façon coulissante dans un espace intérieur (25,25'') d'un boîtier de commande de mode (24,24'') qui est monté sur ledit premier couvercle d'extrémité (4,4''), ledit boîtier de commande de mode comportant un premier orifice (29a,29a'') pour permettre l'admission d'air dans le dit espace intérieur sur une face dudit disque et un deuxième orifice (29b,29b'') pour permettre l'admission d'air dans ledit espace intérieur sur l'autre face dudit disque.

18. Vérin suivant une quelconque des revendications 15 à 17, dans lequel ladite chambre d'air additionnelle (9a,9a') est située à l'intérieur dudit espace annulaire entre lesdits tubes intérieur et extérieur (2, 1), et lesdits moyens de rappel comprennent en outre une unité hydraulique additionnelle associée à ladite chambre d'air additionnelle pour agir sur ladite autre face dudit piston moteur (5).

19. Vérin suivant la revendication 18, dans lequel ladite unité hydraulique additionnelle comprend une chambre de liquide d'entrée additionnelle (8a, 8a') agencée dans ledit espace annulaire de manière à être adjacente à ladite chambre d'air additionnelle (9a, 9a') par l'intermédiaire de moyens d'interface additionnels (10a,10a'),une chambre de liquide de sortie additionnelle (6a) agencée dans ledit tube intérieur (2) de manière à être adjacente à ladite autre face dudit piston (5), et au moins un passage de commande d'écoulement additionnel (17a) formé dans l'autre couvercle d'extrémité (3) de manière à communiquer avec lesdites chambres de liquide d'entrée et de sortie additionnelles, ledit passage additionnel de commande d'écoulement étant pourvu d'une vanne de réglage d'écoulement additionnelle (19a) montée sur ledit autre couvercle d'extrémité de manière à faire saillie dans ledit passage de commande d'écoulement additionnel, lesdits moyens d'interface additionnels pouvant permettre une variation de volume de la dite chambre de liquide d'entrée additionnelle, ladite chambre de liquide de sortie additionnelle étant variable en volume en relation complémentaire à la variation de volume de ladite chambre de liquide d'entrée additionnelle pour engendrer un mouvement axial dudit piston.

20. Vérin suivant la revendication 19, dans lequel chacun desdits couvercles d'extrémité (3,4) comporte en outre un passage de retour (18a,18b) en communication avec les chambres de liquide d'entrée et de sortie correspondantes (8a,8a',8b,8b',6a,6b), ledit passage de retour étant pourvu d'un clapet anti-retour (20a,20b) monté sur chaque dit couvercle d'extrémité pour permettre l'écoulement de liquide seulement de ladite chambre de liquide de sortie correspondante vers ladite chambre de liquide d'entrée correspondante.

21. Vérin suivant la revendication 19 ou 20, dans lequel lesdits moyens d'interface additionnels sont sous la forme d'un piston d'interface annulaire (10a) qui est guidé de façon coulissante dans ledit espace annulaire.

22. Vérin suivant la revendication 19 ou 20, dans lequel lesdits moyens d'interface additionnels sont sous la forme d'une vessie d'interface en caoutchouc (10b') qui est agencée dans ledit espace annulaire pour y définir ladite chambre de liquide d'entrée additionnelle (8b').

23. Vérin suivant une quelconque des revendications 19 à 22, dans lequel ledit tube extérieur (1) comprend deux segments tubulaires (1a,1b) hermétiquement séparés l'un de l'autre mais raccordés l'un à l'autre par un connecteur intermédiaire annulaire (11), lesdites deux chambres d'air étant agencées respectivement de part et d'autre dudit connecteur intermédiaire à l'intérieur dudit espace annulaire, ledit connecteur intermédiaire comportant un premier orifice d'admission d'air (12a) en communication avec une desdites chambres d'air, ledit connecteur intermédiaire comportant en outre un deuxième orifice d'admission d'air (12b) en communication avec l'autre chambre d'air.

24. Vérin suivant la revendication 15, dans lequel ladite chambre d'air additionnelle (9a'') est agencée dans ledit tube intérieur (2'') de manière à être directement adjacente à ladite autre face dudit piston moteur (5'').

25. Vérin suivant la revendication 24, dans lequel ledit passage de commande d'écoulement (17b'') est pourvu d'un clapet anti-retour (40b'') pour permettre l'écoulement du liquide seulement de ladite chambre de liquide d'entrée (8b'') vers ladite chambre de liquide de sortie (6b''), ledit premier couvercle d'extrémité (4'') comportant en outre un passage additionnel de commande d'écoulement (17a'') qui est pourvu d'une vanne de réglage d'écoulement additionnelle (19a'') montée sur ledit premier couvercle d'extrémité de manière à faire saillie dans ledit passage additionnel de commande d'écoulement, ledit passage additionnel de commande d'écoulement étant en outre pourvu d'un clapet additionnel (40a'') pour permettre l'écoulement de liquide seulement de ladite. chambre de liquide de sortie vers ladite chambre de liquide d'entrée.

26. Vérin suivant la revendication 24 ou 25, dans lequel l'autre couvercle d'extrémité (3'') comporte un premier orifice d'admission d'air (12a'') en communication avec une desdites deux chambres d'air, ledit autre couvercle d'extrémité comportant en outre un deuxième orifice d'admission d'air (12b'') en communication avec l'autre chambre d'air.
